# EUROPÄISCHE PATENTSCHRIFT

(11) **EP 2 057 362 B1**
(45) Veröffentlichungstag und Bekanntmachung des Hinweises auf die Patenterteilung: **02.12.2009**
(21) Anmeldenummer: 07786707.5
(22) Anmeldetag: 21.08.2007
(51) Int. Cl.: F02B 21/00, F02B 33/44, F02B 37/00, F02M 25/07

(54) **EINRICHTUNG UND VERFAHREN ZUR FRISCHLUFTVERSORGUNG EINER TURBOAUFGELADENEN KOLBENBRENNKRAFTMASCHINE**
DEVICE AND METHOD FOR SUPPLYING FRESH AIR TO A TURBOCHARGED RECIPROCATING-PISTON INTERNAL COMBUSTION ENGINE
DISPOSITIF ET PROCEDE D'ALIMENTATION EN AIR FRAIS D'UN MOTEUR A COMBUSTION INTERNE A PISTONS SURALIMENTE

(30) Priorität: 22.08.2006 DE 10603930
(43) Veröffentlichungstag der Anmeldung: 13.05.2009
(73) Patentinhaber: KNORR-BREMSE Systeme für Nutzfahrzeuge GmbH, 80809 München (DE)
(72) Erfinder: NEMETH, Huba, 1116 Budapest (HU); GERUM, Eduard, 83026 Rosenheim (DE)
(74) Vertreter: Mattusch, Gundula
(86) Internationale Anmeldenummer: PCT/EP2007/007358
(87) Internationale Veröffentlichungsnummer: WO 2008/022769

(56) Entgegenhaltungen:
- WO-A-2005/064134
- DE-A1- 19 840 629
- DE-A1- 19 913 157

## Beschreibung

Die Erfindung betrifft eine Einrichtung und ein Verfahren zur Frischluftversorgung einer turboaufgeladenen Kolbenbrennkraftmaschine gemäß dem Oberbegriff von Anspruch 1.

Die Frischluftversorgungseinrichtungen der erfindungsgegenständlichen Art werden zur Unterstützung von Abgasturboladern eingesetzt. Insbesondere im unteren Drehzahlbereich einer turboaufgeladenen selbstzündenden Kolbenbrennkraftmaschine kann der angeschlossene Abgasturbolader mangels ausreichender Antriebsenergie meist nicht den erforderlichen Ladedruck leisten. Bemerkbar für den Fahrer machen sich diese Umstände beim Gasgeben aus einer niederen Drehzahl heraus, was als so genannter Turbolocheffekt bekannt ist. Zur Kompensation dieses Turbolocheffekts wird in der Bedarfssituation zusätzliche Druckluft ausgehend von einem Druckluftvorrat des Kraftfahrzeuges in das Saugrohr der Kolbenkraftmaschine eingegeben. Viele Kraftfahrzeugarten, wie Nutzfahrzeuge oder Omnibusse verfügen sowieso über ein Druckluftnetz, woraus u.a. die pneumatische Bremsanlage gespeist wird.

Aus der WO 2005/064134 A1 geht eine gattungsgemäße Frischluftversorgungseinrichtung für eine turboaufgeladene Kolbenbrennkraftmaschine hervor. Die über einen Abgasturbolader komprimierte Ladeluft gelangt im Sinne einer Abgasrückführung (AGR) über ein Saugrohr in den Zylinderraum. Seitlich in das Saugrohr mündet weiterhin eine Druckluftleitung ein, welche über ein Ventil elektronisch gesteuert geöffnet oder geschlossen wird. Um den Turbolocheffekt zu kompensieren, wird das Ventil geöffnet, so dass die externe Druckluft, welche hier aus dem Druckluftspeicher des Druckluftsystems entnommen ist, in den Saugraum gelangt. Um ein Rückströmen dieser zusätzlich eingegebenen Druckluft zu vermeiden, ist in das Saugrohr vor dem Turbolader ein zwangsbetätigtes Rückschlagventil angeordnet.

Dieses Rückschlagventil kann als eine Klappe in der Saugleitung ausgebildet werden. Die Zwangsbetätigung einer Klappe, angeordnet in der Saugleitung, wird üblicher Weise durch einen elektronisch gesteuerten Elektromotor gelöst. In der US 4,624,228 wird für DieselMotoren mit AGR-Vorrichtung vorgeschlagen, in der Saugleitung eine Klappe anzuordnen, die während des Kaltstarts des Diesel-Motors in die Richtung Schließen betätigt wird, sonst ist sie im Normalbetrieb vollkommen geöffnet.

Es ist die Aufgabe der vorliegenden Erfindung, eine effiziente Frischgasversorgungseinrichtung für turboaufgeladene, mit einer AGR-Vorrichtung versehene Kolbenbrennkraftmaschinen zu schaffen, die mit Drucklufteinblasevorrichtung ausgerüstet ist, welche universell bei turboaufgeladenen, selbstzündenden Kolbenbrennkraftmaschinen einsetzbar sind.

Die Aufgabe wird ausgehend von einer Frischgasversorgungseinrichtung gemäß dem Oberbegriff von Anspruch 1 in Verbindung mit dessen kennzeichnenden Merkmalen gelöst. Verfahrenstechnisch wird die Aufgabe durch Anspruch 7 gelöst. Die jeweils nachfolgenden abhängigen Ansprüche geben vorteilhafte Weiterbildungen der Erfindung wieder.

Erfindungsgemäß wird eine Klappe in der Frischgasversorgungseinrichtung so angesteuert, dass sie als Regelklappe für die Drucklufteinblasevorrichtung und für die AGR-Vorrichtung gleichwertig geeignet ist also dass und die Betätigung der Klappe beide Regelanforderungen der Kolbenbrennkraftmaschine erfüllen kann. Es ist weiterhin ein Vorteil der Erfindung, das Beschleunigungs- und Emissionsverhaltens der turboaufgeladenen Kolbenbrennkraftmaschine durch die gemeinsame Steuerung/Regelung der Drucklufteinblasevorrichtung und der AGR-Vorrichtung zu verbessern.

Weitere, die Erfindung verbessernde Maßnahmen werden nachstehend gemeinsam mit der Beschreibung bevorzugter Ausführungsbeispiele der Erfindung anhand der Figuren näher dargestellt. Es zeigt:
- Fig.1: ein Blockschaltbild einer turboaufgeladenen Kolbenbrennkraftmaschine mit Frisch- gasversorgungseinrichtung und AGR-Vorrichtung, und
- Fig.2: ein Blockschaltbild des als Modul ausgebildeten Frischgasleitungsabschnittes der Frischgasversorgungseinrichtung im Detail.

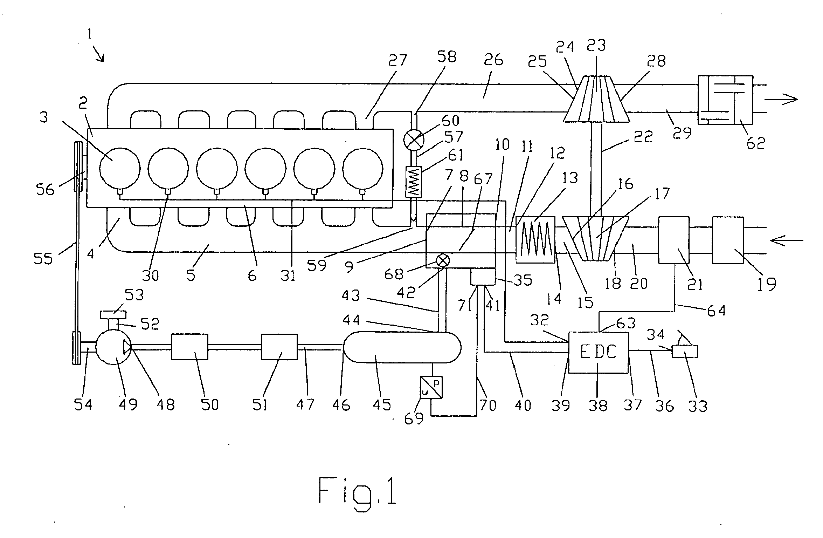

Gemäß Fig.1 umfasst eine Anordnung 1 eine turboaufgeladene Kolbenbrennkraftmaschine 2 mit sechs Zylindern 3 in Reihe, deren Saugleitungen 4 an einer Frischgasversorgungsleitung 5 angeschlossen sind, die eine Anschlussflansch 7 aufweist, woran ein Frischgasleitungsabschnitt-Modul 8 mit seinem zweitem Endanschluss 9 zum Ausströmen angeschlossen ist. Der erste Endanschluss 10 zum Einströmen ist durch eine Leitung 11 mit der Ausströmöffnung 12 des Ladeluftkühlers 13 gekoppelt, deren Einströmöffnung 14 durch eine Leitung 15 mit der Ausströmöffnung 16 des Turbokompressors 17 gekoppelt ist. An die Einströmöffnung 18 des Turbokompressors 17 ist ein Luftfilter 19 mit der Leitung 20 angeschlossen, die ein Massenstromsensor 21 enthält. Der Turbokompressor 17 bildet einen Teil des Abgasturboladers 22, deren Abgasturbine 23 mit seiner Einströmöffnung 24 an die Ausströmöffnung 25 der Abgassammelleitung 26 angeschlossen ist. Die Zylinder 3 sind durch Auspuffleitungen 27 an die Abgassammelleitung 26 angeschlossen. Die Ausströmöffnung 28 der Abgasturbine 23 ist mit dem Abgasrohr 29 zusammengekoppelt.

Die Kraftstoffversorgung der Zylinder 3 erfolgt durch die Einspritzdüsen 30, deren Regelung durch die Leitung 31 vom ersten Anschluss 32 der zentralen elektronischen Steuereinheit 38 durchgeführt wird. An den Anschluss 37 der elektronischen Steuereinheit 38 ist der Anschluss 34 eines Gaspedals 33 durch die Leitung 36 angeschlossen. Das Gaspedal 33 ist mit einem Betätigungsorgan versehen, das in an sich bekannter Weise vom Fahrer des Kraftfahrzeugs betätigt wird. An den Anschluss 63 der elektronischen Steuereinheit 38 ist durch die elektrische Leitung 64 der Massenstromsensor 21 angeschlossen. Der elektrische Anschluss 39 der elektronischen Steuereinheit 38 ist durch die Sammelleitung 40 mit dem elektrischen Anschluss 41 der elektronischen Steuereinheit 35 des Frischgasleitungsabschnitt-Moduls 8 zusammengekoppelt.

Das Frischgasleitungsabschnitt-Modul 8 besitzt einen Druckluftanschluss 42, der durch die Leitung 43 an den Auslassanschluss 44 des Druckluftbehälters 45 angeschlossen ist. Der Speiseanschluss 46 des Druckluftbehälters 45 ist durch die Leitung 47 an den Druckluftanschluss 48 des Druckluftkompressors 49 angeschlossen. In der Leitung 47 sind Druckregler 50 und Lufttrockner 51 eingebaut. Der Druckluftkompressor 49 besitzt einen Saugstutzen 52, der mit einem Luftfilter 53 versehen ist. Die Welle 54 des Druckluftkompressors 49 ist durch Riemenantrieb 55 mit der Hauptwelle 56 des turboaufgeladenen Dieselmotors des Kraftfahrzeugs verbunden. Der Druckluftbehälter 45 ist mit einem Drucksensor 69 versehen, der durch die elektrische Leitung 70 an den Anschluss 71 der elektronischen Steuereinheit 35 angeschlossen ist.

Die Anordnung 1 ist weiterhin mit einer AGR-Vorrichtung 57 versehen, die mit ihrem Abgasanschluss 58 an die Abgassammelleitung 26, mit ihrem Abgasauslassanschluss 59 an die Frischgasversorgungsleitung 5, die das Frischgas in die Zylinder 3 hineinführt, angeschlossen ist. Die AGR-Vorrichtung 57 enthält ein Regelventil 60 und einen Wärmetauscher 61 zum Abkühlen des durchströmenden Abgases. Der Wärmetauscher 61 benutzt als Kühlmittel das Kühlwasser des Motorenkühlers, die Anschlüsse sind nicht dargestellt. Zur Erfüllung von hohen Ansprüchen hinsichtlich von Emission ist im Abgasrohr 29 hinter der Abgasturbine 23 ein Katalysator/Partikelfilter 62 mit Dämpfungsfilter und Schalldämpfer in Reihe geschaltet angeordnet. Das Regelventil 60 ist mit einer elektrischen Leitung 65 an den Anschluss 66 der elektronischen Steuereinheit 38 angeschlossen, die das Regelventil 60 ansteuert, weiterhin werden zwei dargestellte Elemente des Frischgasleitungsabschnitt-Moduls 8, nämlich eine Klappe 67 und eine Mengenregelvorrichtung 68 durch eine elektrische Sammelleitung 40 von der elektronischen Steuereinheit 38 ansteuert. Durch die Klappe 67 werden Einströmraum 91 und Ausströmraum 92 des Frischgasleitungsabschnitt-Moduls 8 getrennt und die Frischgasströmungsquerschnitt geregelt, durch die Mengenregelvorrichtung 68 wird der Druckluftstrom durch die Leitung 43 geregelt.

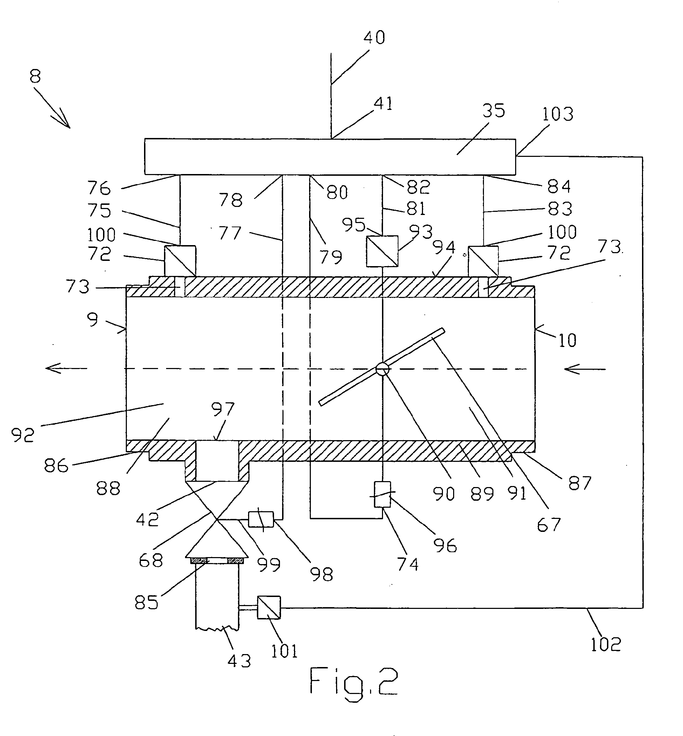

In Fig.2 ist das Modul 8 als solches im Detail dargestellt, welches rohrartig ausgebildet ist, und den ersten Endanschluss 10 sowie den zweiten Endanschluss 9 besitzt, zwischen denen ein Innenraumabschnitt 88 besteht, der einen Kreisquerschnitt aufweist. Der Innenraumabschnitt 88 ist zweckmäßig durch die Wand 89 umschlossen, worin die Welle 90 der Klappe 67 gelagert und hindurchgeführt ist. Die Klappe 67 teilt den Innenraumabschnitt 88 auf in zwei Teile, nämlich den Einströmraum 91, der zwischen dem ersten Endanschluss 10 und der Klappe 67 entsteht, sowie den Ausströmraum 92, der zwischen dem zweiten Endanschluss 9 und der Klappe 67 entsteht.

Die Klappe 67 hat eine geschlossene und eine voll geöffnete Endstellung, sowie beliebige Zwischenstellungen, die durch Verdrehen der Welle 90 eingestellt werden können. Die hierfür vorgesehene Verstellvorrichtung 96 ist in diesem Ausführungsbeispiel als elektrischer Motor ausgebildet und mit einem elektrischen Verstellvorrichtungsanschluss 74 ausgerüstet, der durch eine Leitung 79 mit dem ersten Anschluss 80 der elektronischen Steuereinheit 35 angeschlossen ist. Durch den Verstellvorrichtungsanschluss 74 wird der Verstellvorrichtung 96 mit Strom versorgt; von dem Anschluss 95 des Positionsermittlungssensors 93 wird ein Signal über die Lage der Klappe 67 entnommen; der Anschluss 95 ist wiederum durch eine Leitung 81 an den Anschluss 82 der elektronischen Steuereinheit 35 des Moduls 8 angeschlossen.

In der Wand 89 ist weiterhin eine Druckluft-Einströmöffnung 97 zwischen dem zweiten Endanschluss 9 und der Klappe 67 ausgebildet, woran der Druckluftanschluss 42 angeschlossen ist, der mit einer Mengenregelvorrichtung 68 ausgerüstet ist. Die Mengenregelvorrichtung 68 weist auch eine voll gesperrte Stellung auf. Der elektrische Steuerungsanschluss 98 der Mengenregelvorrichtung 68, die ein Ventil 99 aufweist, ist an den Anschluss 78 der elektronischen Steuereinheit 35 des Moduls 8 durch die Leitung 77 angeschlossen.

An den Anschluss 76 der elektronischen Steuereinheit 35 ist der Anschluss 76 des Druckfühlers 72a - der an der Wand 89 befestigt ist - durch die Leitung 75 angekoppelt; der Druckmesser 73 des Druckfühlers 72a mit Ausgang 100a ist in den Ausströmraum 92 des Frischgasleitungsabschnitts-Moduls 8 hineingesteckt. Ein ähnlicher Anschluss 84 des Druckfühlers 72b - der an der Wand 89 befestigt ist - ist über den Ausgang 100b durch die Leitung 83 an den Anschluss 84 der elektronischen Steuereinheit 35 angekoppelt. Der Druckmesser 73b des Druckfühlers 72b ist in den Einströmraum 91 des Moduls 8 hineingesteckt.

Die elektronische Steuereinheit 35 des Moduls 8 ist mit einem zentralen Anschluss 41 versehen, woran die zentrale Sammelleitung 40 angeschlossen ist. Die Sammelleitung 40 ist als eine Kommunikationsleitung ausgebildet, die an die - nicht dargestellte - Motorelektronik angekoppelt ist, welche eine zentrale Steuereinheit (ECU) umfasst, die mit entsprechenden Softwares versehen ist.

Das Frischgasleitungsabschnitt-Modul 8 ist an beiden Enden mit Leitungsanschlüssen 86 und 87 versehen, die geeignet sind für einen dichtenden Einbau in die Leitung 11, durch die die Frischgasversorgung des turboaufgeladenen Dieselmotors geleistet wird. Die Leitungsanschlüsse 86 und 87 sind so ausgebildet, dass sie für die Befestigung des Frischgasleitungsabschnitts-Moduls 8 geeignet sind.

Die Mengenregelvorrichtung 68 weist eine austauschbare Drossel 85 bei der Einströmöffnung auf, wodurch die Durchströmmenge begrenzt, bzw. modular zur Motorgröße angepasst wird. Die Einrichtung wird vorzugsweise so gestaltet, dass der Ausgang der Drucksensor 69 an die elektronische Steuereinheit 35 des Frischgasleitungsabschnitt-Moduls 8 angeschlossen ist, der Drucksensor 69 ist zum Messen des Druckes im Druckluftbehälter 45.

Die Einrichtung mit Frischgasleitungsabschnitt-Moduls 8 wird vorzugsweise so gestaltet, dass der Ausgang des Drucksensors 101 durch eine elektrische Leitung 102 an den Anschluss 103 der elektronischen Steuereinheit 35 des Frischgasleitungsabschnitt-Moduls 8 angeschlossen ist, der Drucksensor 101 ist zum Messen des Druckes in der Leitung 43 in der nähe der Mengenregelvorrichtung 68 vorgesehen.

Die elektronisch gesteuerte und die Abgasdurchflussmenge regelnden, Ventileinheit 60 der AGR Vorrichtung an die elektronische Steuereinheit 38 der Kolbenbrennkraftmaschine angeschlossen, die eine ECU aufweist, die mit Softwares für die synchronisierte Betätigung der Klappe 67 und der Mengenregelvorrichtung 68 und der Ventileinheit 60 der AGR-Vorrichtung 57 ausgerüstet ist.

Die Funktion der Anordnung 1 verwirklicht das Verfahren der Erfindung zum Verbessern des Beschleunigungs- und Emissionsverhaltens einer Fahrzeug-Kolbenbrennkraftmaschine 2 in Dieselbauart mit Turboaufladung und AGR-Vorrichtung 57, wobei die Einrichtung mit einem Druckluftspeicher 45 versehen ist, worin Druckluft zur geregelt zeitweiligen Einblasung in die Frischgasleitungsabschnitt 8 der Frischgasversorgungsleitung 5 eingeblasen wird. In dem Frischgasleitungsabschnitt 8 ist ein Regelelement in Gestalt der Klappe 67 zur Regelung der AGR-Vorrichtung 57 und der Drucklufteinblase-Vorrichtung angeordnet. Die folgenden Verfahrensschritte werden durchgeführt:
- Ermitteln des Drehmomentanforderungssignals und Zuführen die Daten zur elektronischen Steuereinheit 38,
- Ermitteln der motorischen Kennwerten und Zuführen die Kennwerten zur elektronischen Steuereinheit 38,
- Ermitteln des Luftdrucks im Innenraum des Frischgasleitungsabschnitts-Modul 8 zwischen Zylindereinlassventil und Klappe 67 und Zuführen des Druckwerts zur elektronischen Steuereinheit 38,
- Verarbeiten vorgenannter zugeführter Daten in der elektronischen Steuereinheit zur Erstellung von Betätigungs-Ausgangssignalen für eine synchronisierte Betätigung der Klappe mit der Mengenregelvorrichtung und dem Regelventil der AGR-Vorrichtung.

Vorzugsweise wird das Verfahren so ausgeführt, dass in den elektronischen Steuereinheiten 35 oder 38 aus den Eingangssignalen die Ausgangssignale rechentechnisch durch Softwares ermittelt werden.

Vorzugsweise wird das Verfahren so ausgeführt, dass in der elektronischen Steuereinheit 38 zur Erstellung von Betätigungs-Ausgangssignalen zur Betätigung der Klappe 67 im Falle eines gleichzeitigen Ansprechens der AGR-Vorrichtung 57 und der Druckluft-Einblasung immer das Ansprechen der Druckluft-Einblasung bevorzugt wird.

Der Ausgang der Drucksensor 69 ist an der elektronischen Steuereinheit des Frischgasleitungsabschnitt-Moduls angeschlossen, der Drucksensor 69 ist zum Messen des Druckes im Druckluftbehälter 45 vorgesehen.

Das Signal des Drucksensors 69, der zum Messen des Druckes im Druckluftbehälter 45 vorgesehen ist, wird in die elektronische Steuereinheit 35 während des Einblasens kontinuierlich vermittelt und verarbeitet, wodurch der Massenstrom der eingeblasene Druckluft der Mengenregelvorrichtung 68 kontinuierlich bestimmt wird und dessen Resultat an die elektronische Steuereinheit 38 der Kolbenbrennkraftmaschine 2 als Eingangssignal zur Verfügung gestellt wird.

Das Signal des Drucksensors 101, der zum Messen des Druckes in der Leitung 43 der Einblaseluft vorgesehen ist, wird in die elektronische Steuereinheit 35 vor dem Einblasen vermittelt, wodurch der Massenstrom der eingeblasenen Druckluft der Mengenregelvorrichtung 68 kontinuierlich bestimmt wird und dessen Resultat an die elektronische Steuereinheit 38 der Kolbenbrennkraftmaschine 2 als Eingangssignal zur Verfügung gestellt wird.

Das Signal des Massenstromes wird zusammen mit dem Volumen des Druckluftbehälters 45 während des Einblasens für die rechnerische Bestimmung des Druckes des Druckluftbehälters 45 verwendet.

## Patentansprüche

1. Einrichtung zur Frischgasversorgung für eine turboaufgeladene, selbstzündende Kolbenbrennkraftmaschine (2) mit Frischgasversorgungsleitung (5) und Abgassammelleitung (26) umfassend einen rohrförmigen Innenraumabschnitt (88) der Frischgasversorgungsleitung (5), in denen seitlich ein Druckluftanschluss (42) einmündet, der mit einer Mengenregelvorrichtung (68) versehen ist, sowie eine im Innenraumabschnitt (88) angeordnete verstellbare Klappe (67) zur Durchflussregulierung, wobei der Innenraumabschnitt (88) einen ersten Endanschluss (10) zur Einströmung sowie einen zweiten Endanschluss (9) zur Ausströmung von Ladeluft eines Abgasturboladers aufweist, die Klappe (67) ist zwischen Druckluftanschluss (42) und dem ersten Endanschluss (10) angeordnet und an eine Verstellvorrichtung (96) angekoppelt, die zur Betätigung an eine, die Sensorsignalen verarbeitende, elektronische Steuereinheit (38) der Kolbenbrennkraftmaschine (2) angeschlossen ist,
**dadurch gekennzeichnet, dass** zwischen Frischgasversorgungsleitung (5) und Abgassammelleitung (26) eine AGR-Vorrichtung (57) eingebaut ist, und dass ein elektronisch gesteuertes, die Abgasdurchflussmenge regelndes Regelventil (60) der AGR-Vorrichtung (57) an die elektronische Steuereinheit (38) der Kolbenbrennkraftmaschine (2) angeschlossen ist, um eine synchronisierte Betätigung der Klappe (67) mit der Mengenregelvorrichtung (68) und dem Regelventil (60) der AGR-Vorrichtung (57) zu realisieren.

2. Einrichtung nach Anspruch 1,
**dadurch gekennzeichnet, dass** je ein Sensor für die Stellung der Klappe (67), für die Stellung des Regelventils (60) der AGR-Vorrichtung (57) und für die Stellung der Mengenregelvorrichtung (68) vorgesehen ist, die an die elektronische Steuereinheit (35 oder 38) der Kolbenbrennkraftmaschine (2) angeschlossen sind, woran auch die die Betriebsparameter der Kolbenbrennkraftmaschine (2) erfassenden Sensoren (21, 69, 72, 101) zwecks Datenverarbeitung angeschlossen sind.

3. Einrichtung nach Anspruch 1,
**dadurch gekennzeichnet, dass** an die elektronische Steuereinheit (35 oder 38) die elektrischen Ausgänge von Drucksensoren (69, 72, 101) angeschlossen sind, die in der Frischgasversorgungsleitung (5) vor und hinter der Klappe (67) eingebaut sind.

4. Einrichtung nach Anspruch 1,
**dadurch gekennzeichnet, dass** die Klappe (67) in einem Frischgasleitungsabschnitt-Modul (8) der Frischgasversorgungsleitung (5) angeordnet ist, welche die Drucksensoren (72a, 72b) vor der Klappe (67) und hinter der Klappe (67) enthält, sowie den Druckluftanschluss (42), wobei der Abgasauslassanschluss (59) in der Sammelleitung (5) der Frischgasversorgungsleitung (5) zwischen den Zylindern (3) der Kolbenbrennkraftmaschine (2) und dem Frischgasleitungsabschnitt-Modul (8) angeordnet ist.

5. Einrichtung nach Anspruch 1,
**dadurch gekennzeichnet, dass** der Ausgang des Drucksensors (69) an die elektrische Steuereinheit (35) des Frischgasleitungsabschnitt-Moduls (8) angeschlossen ist, zum Erfassen des Druckes im Druckluftbehälter (45).

6. Einrichtung nach Anspruch 1,
**dadurch gekennzeichnet, dass** der Ausgang des Drucksensors (101) an die elektrische Steuereinheit (35) des Frischgasleitungsabschnitt-Moduls (8) angeschlossen ist zum Erfassen des Druckes in der Leitung (43) in der Nähe der Mengenregelvorrichtung (68).

7. Verfahren zum Verbessern des Beschleunigungs-und Emissionsverhaltens einer Kolbenbrennkraftmaschine (2) in Selbstzündendenbauart mit Turboaufladung und AGR-Vorrichtung (57), die mit einem Druckluftspeicher (45) versehen ist, womit Druckluft zur geregelt zeitweiligen Einblasung in den Frischgasleitungsabschnitt (8) der Frischgasversorgungsleitung (5) eingeblasen wird, wozu als zusätzliches Regelelement eine Klappe (67) zur Regelung der AGR-Vorrichtung (57) und zur Regelung der Drucklufteinblasung genutzt wird, mit folgenden Verfahrensschritten:
- Ermitteln des Drehmomentanforderungssignals und Zuführen die Daten zur elektronischen Steuereinheit (38),
- Ermitteln der motorischen Kennwerten und Zufuhren die Kennwerten zur elektronischen Steuereinheit (38),
- Ermitteln des Luftdrucks im Innenraum des Frischgasleitungsabschnitts (8) zwischen Zylindereinlassventil und Klappe (67) und Zufuhren des Druckwerts zur elektronischen Steuereinheit (38), und
- Verarbeiten vorgenannter zugeführter Daten in der elektronischen Steuereinheit (38) zur Erstellung von Betätigungs-Ausgangssignalen für eine synchronisierte Betätigung der Klappe (67) mit der Mengenregelvorrichtung (68) und dem Regelventil (60) der AGR-Vorrichtung (57).

8. Verfahren nach Anspruch 7,
**dadurch gekennzeichnet, dass** in der elektronischen Steuereinheit (38) zur Erstellung von Betätigungs-Ausgangssignalen zur Betätigung der Klappe (67) im Falle eines gleichzeitigen Ansprechens der AGR-Vorrichtung (57) und der Drucklufteinblasung immer des Ansprechen der Drucklufteinblasung bevorzugt wird.

9. Verfahren nach Anspruch 7,
**dadurch gekennzeichnet, dass** in der elektronischen Steuereinheit (38) zur Erstellung von Betätigungs-Ausgangssignalen zur Betätigung der Klappe (67) in Richtung Schließen im Falle eines gleichzeitigen Ansprechens der AGR-Vorrichtung (57) und der Drucklufteinblasung immer das Ansprechen der Drucklufteinblasung bevorzugt wird.

10. Verfahren nach Anspruch 7,
**dadurch gekennzeichnet, dass** der Ausgang der Drucksensor (69) an die elektrische/elektronische Steuereinheit (35) des Frischgasleitungsabschnitt-Moduls (8) angeschlossen ist, der Drucksensor (69) ist zum Messen des Druckes im Druckluftbehälter (45).

11. Verfahren nach Anspruch 7,
**dadurch gekennzeichnet, dass** das Signal des Drucksensors (69), der zum Messen des Druckes im Druckluftbehälter (45) vorgesehen ist, in der elektronischen Steuereinheit (35) während des Einblasens kontinuierlich vermittelt und verarbeitet wird, wodurch der Massenstrom der eingeblasenen Druckluft der Mengenregelvorrichtung (68) kontinuierlich bestimmt wird und dessen Resultat an die elektronische Steuereinheit (38) der Kolbenbrennkraftmaschine (2) als Eingangssignal zur Verfügung gestellt wird.

12. Verfahren nach Anspruch 7,
**dadurch gekennzeichnet, dass** das Signal des Drucksensors (101), der zum Messen des Druckes in der Leitung (43) der Einblaseluft vorgesehen ist, in der elektronischen Steuereinheit (35) vor dem Einblasen vermittelt und verarbeitet wird, wodurch der Massenstrom der eingeblasenen Druckluft der Mengenregelvorrichtung (68) kontinuierlich bestimmt wird und dessen Resultat an die elektronische Steuereinheit (38) der Kolbenbrennkraftmaschine (2) als Eingangssignal zur Verfügung gestellt wird.

13. Verfahren nach Anspruch 12,
**dadurch gekennzeichnet, dass** das Signal des Massenstromes zusammen mit dem Volumenwert des Druckluftbehälters (45) während des Einblasens für die rechnerische Bestimmung des Druckes des Druckluftbehälters (45) verwendet werden.

14. Computerprogrammprodukt für eine Einrichtung nach einem der Ansprüche 1 bis 6, welche nach einem Verfahren nach einem der Ansprüche 7 bis 13 betreibbar ist, wobei die Routine zur Erstellung der Betätigungs-Ausgangssignale durch entsprechende in einer Software hinterlegte Steuerungsbefehle umgesetzt ist.

## Claims

1. A device for fresh-gas supply for a turbocharged, compression-ignition, reciprocating-piston internal-combustion engine (2) with a fresh-gas supply pipe (5) and exhaust gas manifold pipe (26), comprising a tubular inside space section (88) of the fresh-gas supply pipe (5) into the side of which leads a compressed-air connection (42) which is provided with a volume control device (68) and also an adjustable butterfly valve (67) for controlling throughflow which is arranged in the inside space section (88), wherein the inside space section (88) has a first end connection (10) for inflow of charging air of an exhaust gas turbocharger, and also a second end connection (9) for outflow of charging air, which butterfly valve (67) is arranged between the compressed-air connection (42) and the first end connection (10) and is connected to an adjusting device (96) which for operation is connected to an electronic control unit (38) of the reciprocating-piston internal-combustion engine (2) which processes sensor signals, **characterized in that** between a fresh-gas supply pipe (5) and exhaust gas manifold pipe (26) an EGR device (57) is installed, and that the control valve (60) of the EGR device (57), which is electronically controlled and controls the exhaust gas throughflow volume, is connected to the electronic control unit (38) of the reciprocating-piston internal-combustion engine (2) for a synchronized operation of the butterfly valve (67) with the volume control device (68) and the control valve (60) of the EGR device (57) to be realized.

2. The device as claimed in claim 1,
**characterized in that** one sensor each is provided for the position of the butterfly valve (67), for the position of the control valve (60) of the EGR device (57) and for the position of the volume control device (68), which are connected to the electronic control unit (35 or 38) of the reciprocating-piston internal-combustion engine (2), to which the sensors (21, 69, 72, 101) which sense the operating parameters of the reciprocating-piston internal-combustion engine (2) are also connected for the purpose of data processing.

3. The device as claimed in claim 1,
**characterized in that** the electrical outputs of pressure sensors (69, 72, 101), which are installed in the fresh-gas supply pipe (5) upstream and downstream of the butterfly valve (67), are connected to the electronic control unit (35 or 38).

4. The device as claimed in claim 1,
**characterized in that** the butterfly valve (67) is arranged in a fresh-gas pipe section module (8) of the fresh-gas supply pipe (5) which includes the pressure sensors (72a, 72b) upstream of the butterfly valve (67) and downstream of the butterfly valve (67), and also the compressed-air connection (42), wherein the exhaust gas outlet connection (59) is arranged in the manifold pipe (5) of the fresh-gas supply pipe (5) between the cylinders (3) of the reciprocating-piston internal-combustion engine (2) and the fresh-gas pipe section module (8).

5. The device as claimed in claim 1,
**characterized in that** the output of the pressure sensor (69) is connected to the electric control unit (35) of the fresh-gas pipe section module (8) for sensing the pressure in the compressed-air reservoir (45).

6. The device as claimed in claim 1,
**characterized in that** the output of the pressure sensor (101) is connected to the electric control unit (35) of the fresh-gas pipe section module (8) for sensing the pressure in the pipe (43) in the proximity of the volume control device (68).

7. A method for improving the accelerating and emissions behavior of a reciprocating-piston internal-combustion engine (2) of compression-ignition configuration with turbocharging and EGR device (57), which is provided with a compressed-air accumulator (45) with which compressed air is injected for occasional injection in a controlled manner into the fresh-gas pipe section module (8) of the fresh-gas supply pipe (5), for which a butterfly valve (67) is used as an additional control element for controlling the EGR device (57) and for controlling the compressed-air injection, with the following method steps:
- determining the torque requirement signal and feeding the data to the electronic control unit (38),
- determining the engine characteristic values and feeding the characteristic values to the electronic control unit (38),
- determining the air pressure in the inside space of the fresh-gas pipe section (8) between cylinder inlet valve and butterfly valve (67), and feeding the pressure value to the electronic control unit (38), and
- processing aforementioned supplied data in the electronic control unit (38) for creating operating output signals for a synchronized operation of the butterfly valve (67) with the volume control device (68) and the control valve (60) of the EGR device (57).

8. The method as claimed in claim 7,
**characterized in that** in the electronic control unit (38), for creating operating output signals for operation of the butterfly valve (67) in the case of a simultaneous response of the EGR device (57) and of the compressed-air injection, the response of the compressed-air injection is always given priority.

9. The method as claimed in claim 7,
**characterized in that** in the electronic control unit (38), for creating operating output signals for operation of the butterfly valve (67) in the closing direction in the case of a simultaneous response of the EGR device (57) and of the compressed-air injection, the response of the compressed-air injection is always given priority.

10. The method as claimed in claim 7,
**characterized in that** the output of the pressure sensor (69) is connected to the electric/electronic control unit (35) of the fresh-gas pipe section module (8), which pressure sensor (69) is for measuring the pressure in the compressed-air reservoir (45).

11. The method as claimed in claim 7,
**characterized in that** the signal of the pressure sensor (69), which is provided for measuring the pressure in the compressed-air reservoir (45), is continuously transmitted to, and processed in, the electronic control unit (35) during injecting, as a result of which the mass flow of injected compressed air to the volume control device (68) is continuously determined and its result is made available to the electronic control unit (38) of the reciprocating-piston internal-combustion engine (2) as an input signal.

12. The method as claimed in claim 7,
**characterized in that** the signal of the pressure sensor (101), which is provided for measuring the pressure in the injection-air pipe (43), is transmitted to, and processed in, the electronic control unit (35) before injecting, as a result of which the mass flow of injected compressed air to the volume control device (68) is continuously determined and its result is made available to the electronic control unit (38) of the reciprocating-piston internal-combustion engine (2) as an input signal.

13. The method as claimed in claim 12,
**characterized in that** the signal of mass flow together with the volumetric value of the compressed-air reservoir (45) during injecting are used for determining by computer the pressure of the compressed-air reservoir (45).

14. A computer program product for a device as claimed in one of claims 1 to 6, which can be run according to a method as claimed in one of claims 7 to 13, wherein the routine for creating the operating output signals is put into effect by means of corresponding control commands which are deposited in software.

## Revendications

1. Dispositif à alimenter un moteur à combustion interne à pistons (2) à autoallumage et à suralimentation par turbosoufflante (2) en gaz frais, à un tubulure d'admission de gaz frais (5) et un conduit collecteur des gaz d'échappement (26), et comprenant une partie tubulaire d'espace intérieur (88) dudit tubulure d'admission de gaz frais (5), dans lequel s'ouvre latéralement un raccord d'air comprimé (42) pourvu d'un dispositif de réglage du débit (68), ainsi qu'un clapet ajustable (67) disposé dans ladite partie d'espace intérieur (88) pour le réglage d'écoulement, dans lequel ladite partie d'espace intérieur (88) comprend un premier raccord terminal (10) pour l'entrée ainsi qu'un deuxième raccord terminal (9) pour la sortie d'air de suralimentation d'une turbosoufflante à gaz d'échappement, et dans lequel ledit clapet (67) est disposé entre ledit raccord d'air comprimé (42) et ledit premier raccord terminal (10), en étant accouplé à un dispositif d'ajustage (96) qui est raccordé, pour son actionnement, à une unité de commande du moteur à combustion interne à pistons (2), qui traite des signaux des détecteurs,
**caractérisé en ce qu'**un dispositif de réglage du recyclage des gaz échappement (AGR) (57) est monté entre ledit tubulure d'admission de gaz frais (5) et ledit conduit collecteur des gaz d'échappement, et **en ce qu'**un soupape de réglage à commande électronique (60) dudit dispositif de réglage du recyclage des gaz échappement (57), qui règle le débit de passage des gaz d'échappement, est raccordé à ladite unité électronique de commande (38) du moteur à combustion interne à pistons (2) afin de réaliser un actionnement dudit clapet (67) en synchronisme avec ledit dispositif de réglage de débit (68) et ledit soupape de réglage (60) dudit dispositif de réglage du recyclage des gaz d'échappement.

2. Dispositif selon la revendication 1,
**caractérisé en ce qu'**un détecteur respectif est monté à détecter la position dudit clapet (67), la position dudit soupape de réglage (60) dudit dispositif de réglage du recyclage des gaz d'échappement (57) et la position dudit dispositif de réglage de débit (68), qui sont raccordés à ladite unité électronique de commande (35 ou 38) du moteur à combustion interne à pistons (2), à laquelle se raccordent également lesdits détecteurs (21, 69, 72, 101), qui détectent les paramètres de fonctionnement du moteur à combustion interne à pistons (2), à la fin de traitement des données.

3. Dispositif selon la revendication 1,
**caractérisé en ce que** les sorties électriques des capteurs de pression (69, 72, 101) sont raccordées à ladite unité électronique de commande (35 ou 38), qui sont montés dans ledit tubulure d'admission de gaz frais (5) en amont et en aval dudit clapet (67).

4. Dispositif selon la revendication 1,
**caractérisé en ce que** ledit clapet (67) est disposé dans un module (8) de canalisation dudit tubulure d'admission de gaz frais, qui renferme lesdits capteurs de pression (72a, 72b) en amont dudit clapet (67) et en aval dudit clapet (67), ainsi que ledit raccord de l'air comprimé (42), audit raccord de sortie des gaz d'échappement (59) étant disposé dans ledit conduit collecteur (5) dudit tubulure d'admission de gaz frais (5) entre les cylindres (3) du moteur à combustion interne à pistons (2) et ledit module (8) de canalisation dudit tubulure d'admission des gaz frais.

5. Dispositif selon la revendication 1,
**caractérisé en ce que** la sortie dudit capteur de pression (69) est raccordée à ladite unité électrique de commande (35) dudit module (8) de canalisation dudit tubulure d'admission des gaz frais afin de détecter la pression régnant dans ledit accumulateur de l'air comprimé (45).

6. Dispositif selon la revendication 1,
**caractérisé en ce que** la sortie dudit capteur de pression (101) est raccordée à ladite unité électrique (35) dudit module (8) de canalisation dudit tubulure d'admission des gaz frais afin de détecter la pression régnant dans ledit conduit (43) à la proximité dudit dispositif de réglage de débit (68).

7. Procédé à améliorer le comportement en accélération et émission d'un moteur à combustion interne à pistons (2) du type à autoallumage et à suralimentation par turbosoufflante et à un dispositif de réglage du recyclage des gaz d'échappement (57), qui est pourvu d'un accumulateur à air comprimé (45), moyennant duquel de l'air comprimé est insufflé temporairement dans ladite partie (8) de ladite canalisation des gaz frais dudit tubulure d'admission de gaz frais (5), à laquelle fin s'utilise un clapet (67), en tant qu'élément régulateur additionnel, pour le réglage dudit dispositif de réglage de recyclage des gaz d'échappement (57) et pour le réglage de l'insufflation de l'air comprimé, comprenant les étapes suivantes :
- détection du signal de demande de couple moteur et l'alimentation des données à ladite unité électronique de commande (38),
- identification des valeurs caractéristiques de motorisation et alimentation de ces valeurs caractéristiques à ladite unité électronique de commande (38),
- identification de la pression d'air à l'intérieur de ladite canalisation des gaz frais (8) entre la soupape d'entrée au cylindre et ledit clapet (67) et alimentation de la valeur de pression à ladite unité électronique de commande (38), et
- traitement des données et valeurs alimentées susmentionnées dans ladite unité électronique de commande (38) afin d'engendre des signaux de commande de sortie pour une commande dudit clapet (67) en synchronisme avec ledit dispositif de réglage de débit (68) et ledit soupape de réglage (60) dudit dispositif de réglage du recyclage des gaz d'échappement (57).

8. Procédé selon la revendication 7,
**caractérisé en ce que** la réponse du système d'insufflation de l'air comprimé est toujours préférée dans ladite unité électronique de commande (38) pour l'établissement des signaux de commande de sortie à commander ledit clapet (67) au cas d'une réaction simultanée dudit dispositif de réglage du recyclage des gaz d'échappement (57) et dudit système d'insufflation de l'air comprimé.

9. Procédé selon la revendication 7,
**caractérisé en ce que** la réponse du système d'insufflation de l'air comprimé est toujours préférée dans ladite unité électronique de commande (38) pour l'établissement des signaux de commande de sortie à commander ledit clapet (67) en une direction de fermeture au cas d'une réaction simultanée dudit dispositif de réglage du recyclage (57) et dudit système d'insufflation de l'air comprimé.

10. Procédé selon la revendication 7,
**caractérisé en ce que** la sortie dudit capteur de pression (69) est raccordée à ladite unité de commande électrique/électronique (35) dudit module (8) de canalisation dudit tubulure d'admission des gaz frais, audit capteur de pression (69) étant prévu pour la détection de la pression dans ledit accumulateur de l'air comprimé (45).

11. Procédé selon la revendication 7,
**caractérisé en ce que** le signal dudit capteur de pression (69), qui est prévu pour la détectons de la pression dans ledit accumulateur de l'air comprimé (45), est communiqué et traité en continu dans ladite unité de commande électronique (35) au cours de l'insufflation, ce qui permet la détection continue du flux massique de l'air comprimé insufflé dudit dispositif de réglage de débit (68), et **en ce que** le résultat est rendu disponible en tant qu'un signal d'entrée à ladite unité électronique de commande du moteur à combustion interne à pistons (2).

12. Procédé selon la revendication 7,
**caractérisé en ce que** le signal dudit capteur de pression (101), qui est prévu pour la détection de la pression dans le conduit (43) de l'air d'insufflation, est communiqué et traité dans ladite unité électronique de commande (35) avant l'insufflation, ce qui permet la détection continue du flux massique de l'air comprimé insufflé dudit dispositif de réglage de débit (68), et **en ce que** le résultat est rendu disponible en tant qu'un signal d'entrée à ladite unité électronique de commande du moteur à combustion interne à pistons (2).

13. Procédé selon la revendication 12,
**caractérisé en ce que** le signal du flux massique est utilisé, ensemble avec la valeur du volume dudit accumulateur de l'air comprimé (45), au cours de l'insufflation pour l'établissement mathématique de la pression dudit accumulateur de l'air comprimé (45).

14. Produit de logiciel d'ordinateur pour un dispositif selon une quelconque des revendications 1 à 6, qui se prête à un fonctionnement par un procédé selon une quelconque des revendications 7 à 13, dans lequel le sous-programme à engendrer les signaux de commande de sortie est réalisé par des instructions appropriées de commande déposées dans un logiciel.
